# EUROPEAN PATENT SPECIFICATION

(11) **EP 1 176 002 B1**
(45) Date of publication and mention of the grant of the patent: **03.11.2010**
(21) Application number: 00902946.3
(22) Date of filing: 14.02.2000
(51) Int. Cl.: B32B 27/18, B65D 65/40

(54) **PACKAGING LAMINATE**
MEHRSCHICHTIGES VERPACKUNGSMATERIAL
STRATIFIE D'EMBALLAGE

(30) Priority: 12.02.1999 JP 3406899
(43) Date of publication of application: 30.01.2002
(73) Proprietor: Kureha Corporation, Chuo-Ku Tokyo 103-8553 (JP)
(72) Inventor: Itoh, Tadayoshi, Kureha Chemical Industry Co. Ltd., Tamari-mura, Niihari-gun, Ibaraki 311-3436 (JP); Ueyama, Takahisa, Kureha Chemical Industry Co. Ltd., Tamari-mura, Niihari-gun, Ibaraki 311-3436 (JP); Higashi, Takeo, Kureha Chemical Industry Co. Ltd., Tamari-mura, Niihari-gun, Ibaraki 311-3436 (JP)
(74) Representative: Uchida, Kenji
(86) International application number: PCT/JP2000/000791
(87) International publication number: WO 2000/047406

(56) References cited:
- EP-A- 0 444 339
- EP-A- 0 595 252
- JP-A- 01 253 445
- US-A- 4 956 232
- US-A- 5 472 791

## Description

### Technical Field

The present invention relates to a packaging laminate, and more particularly to a packaging laminate which has self-weldability and exhibits, after completion of vacuum packaging, excellent transparency and gloss in a portion other than a packaged matter portion.

### Background Art

Conventionally, bags and pouches formed of multi-layer film have been often used for packaging foods. Multi-layer film, *inter alia*, heat-shrinkable film, is used so as to tightly package the content. For example, in a typical scheme, an object to be packaged is filled into a bag or a pouch formed of heat-shrinkable film and subjected to vacuum packaging. The thus-vacuum-packed product is passed through a hot shower or immersed in hot water, to thereby thermally shrink the bag or the pouch. When multi-layer film is caused to shrink, optical properties of the film such as transparency and gloss are problematically deteriorated particularly after shrinkage. This deterioration in optical properties is undesirable in the fields for which excellent optical properties are required.

When irregularly shaped foods such as meat and fish meat (e.g., raw meat and processed meat) are packaged by use of multi-layer film, poor appearance of edges (the term "edge" refers to a portion other than a packaged matter portion that is formed through thermal shrinkage) of a bag or a pouch is not accepted by consumers. Consumers prefer inner surface resin layers of edges of a bag or a pouch being welded during shrinkage (hereinafter the bonding manner is referred to as "self-welding"), in that drip produced from packed raw meat or processed meat can be visually concealed. If self-weldability is poor; i.e., portions of film corresponding to edges are not bonded or are not substantially bonded after thermal shrinkage, drip remains in the edges during storage after packaging, providing - problematically poor appearance.

In the field of vacuum-pack bags and pouches for vacuum packaging meat and fish meat, ease of opening the bags and pouches (i.e., openability) is a key property. If the openability is poor, filling a content in a bag or a pouch becomes difficult, disadvantageously reducing operation efficiency. In order to impart excellent openability to a bag or a pouch, there has been often employed a method including applying a powder (e.g., starch microparticles) onto a surface layer of the film. However, applying of such a powder poses a problem on performance and production of the film. Specifically, when a large amount of powder is applied on the film and the film is rolled, the powder makes the surface layer of the film rough, to thereby disadvantageously reduce transparency and gloss. In addition, transparency and gloss vary between a core portion and a surface portion in the same roll. Thus, reduction in amount of powder is strongly desired among the persons skilled in the art.

During vacuum packaging, when a large amount of powder is applied onto a portion of an inner surface (inner surface layer) corresponding to an edge, self-weldability deteriorates, to thereby reduce transparency of the edge. In addition, the area of the edge is decreased through thermal shrinkage, to thereby increase the amount of powder per unit area. Thus, opacity of the edge increases, thereby leading to undesirable outcome. When a bag has no or substantially no self-weldability, drip is deposited in edges during storage, to provide poor appearance, irrespective of decrease in transparency due to powder. Even when self-weldability is provided, if an edge contains a powder, the edge becomes disadvantageously opaque. In terms point of production, an additional step is required, in order to apply a powder onto an inner surface of a bag, thereby reducing productivity and cost performance. An object of the present invention is to provide a packaging laminate which has self-weldability and exhibits, after completion of vacuum packaging, excellent transparency and gloss in an edge.

### Disclosure of the Invention

The present inventors have carried out extensive studies in order to solve the problems regarding the aforementioned conventional art, and have found that a laminate comprising at least three layers including an inner surface layer, an intermediate layer adjacent thereto, and an outer surface layer, wherein the inner surface layer contains an inorganic lubricant and an organic lubricant; the intermediate layer contains an organic lubricant; and the inner surface layer has self-weldability, maintains film-openability without treating with powder such as starch microparticles; enhances transparency and gloss after shrinkage; prevents retention of drip; and enhances film appearance. The present invention has been accomplished on the basis of this finding.

Accordingly, the present invention provides a packaging laminate as described in present claim 1, comprising at least three layers including an inner surface layer coming into contact with an object to be packed, an intermediate layer adjacent to the inner surface layer, and an outer surface layer, wherein the inner surface layer contains an inorganic lubricant and an organic lubricant; the intermediate layer contains an organic lubricant; and the laminate is endowed with self-weldability through heat treatment, and provides a laminate as described above for packaging meat or fish meat. The invention also provides a packaging laminate as described above, wherein the inner surface layer has a dynamic friction coefficient of 0.1-0.5 and serves as a seal layer, and a packaging laminate as described above, which packaging laminate is heat-shrinkable. The invention further provides a packaging laminate as described above, wherein the inner surface layer contains an added inorganic lubricant, and the inner surface layer or the intermediate layer adjacent to the inner surface layer contains an added organic lubricant; and a packaging laminate as described above, wherein the intermediate layer includes a layer adjacent to the outer surface layer containing an added organic lubricant. The invention further provides a packaging laminate as described above, wherein the outer surface layer contains no added inorganic lubricant; a packaging laminate as described above, wherein the outer surface layer is formed of a polyester resin or a nylon resin and contains an added inorganic lubricant; and a packaging laminate as described above, wherein at least one of the inner surface layer and the outer surface layer is formed of a polyethylene produced in the presence of a single-site catalyst. The present invention provides a packaging laminate as described above, wherein the intermediate layer includes at least one gas-barrier layer; and a packaging laminate as described above, wherein the inner surface layer is not subjected to treatment by use of free starch microparticles.

### Best Modes for Carrying Out the Invention

The present invention will next be described in detail. The present invention provides a laminate for packaging meat or fish meat, which laminate has excellent transparency and gloss; maintains film openability and adjusts friction of an inner surface layer through combination of the inner surface layer containing an inorganic lubricant and an organic lubricant and an intermediate layer being adjacent thereto and containing an organic lubricant. Portions of the internal surface layer are self-welded through heat treatment.

Generally, the transparency and gloss of multi-layer film is reduced through heat treatment. Since a film surface must be subjected to treatment with powder so as to attain sufficient film openability, the transparency and gloss are further deteriorated. Furthermore, addition of an inorganic lubricant or an organic lubricant into a resin is well-known to attain sufficient film openability and film lubricity for bag productivity. However, such addition also deteriorates the transparency and gloss. Thus, there has been no method for further enhancing transparency and gloss of a packaging laminate formed of multilayer film/sheets while maintaining openability.

According to the present invention, an inorganic lubricant and an organic lubricant are added to the inner surface layer of the film for constituting a packaging laminate (preferably, such that the friction coefficient falls within a specific range), and the formed laminate is heat-treated, to thereby induce self-welding. Thus, the transparency and gloss of the laminate for packaging foods such as meat and fish meat can be successfully enhanced while film openability is maintained.

In the present invention, the expression "a layer contains a lubricant" refers also to "a layer contains a lubricant which has not been contained in the layer at an initial stage but has migrated from another layer." By adding an organic lubricant to the intermediate layer adjacent to the inner surface layer or the outer surface layer, the amount of the lubricant contained in the inner surface layer or the outer surface layer can be reduced by virtue of migration of the lubricant, or addition of the lubricant to the surface layers can be omitted. As the amount of the lubricant contained in the inner surface or outer surface layer decreases, generation of "eye mucus" (a kind of thermal decomposition product of resin) during extrusion can be prevented, and molding yield and film appearance can be maintained. When attainment of film lubricity within a short period of time is required due to a requirement for immediately forwarding products to the market, lubricity can be adjusted by adding a lubricant to the inner surface layer or the outer surface layer as well as to an intermediate layer adjacent thereto. Extrusion cannot be performed when an excessively large amount of an organic lubricant is added to one component layer. Migration of the lubricant occurs readily when the adjacent layer is formed of polyolefin. The "heat treatment" in the expression "endowed with self-weldability through heat treatment" refers to heat treatment such as thermal shrinkage, thermal sterilization, or cooking.

In the present invention, "self-weldability" refers to a phenomenon provided through heat treatment of a resin employed in the inner surface layer of a multi-layer film at a temperature which attains a ratio (expressed as a percentage) of enthalpy of crystal fusion (specific temperature (desired heat-treatment temperature) or lower) to enthalpy of crystal fusion (within the entire fusion temperature range) of at least 15%, preferably at least 25%, more preferably at least 30%. The average strength of self-weldability varies in accordance with the content to be packed. For example, when the content is roast pork, the strength is preferably at least 30 g/15 mm.

The lubricants employed in the present invention are a type of particularly important additives for molded plastic products, and are actually used for reducing friction at an interface between film and an object. Any known inorganic filler which is to be added to a resin so as to suppress sticking between films can be used as the inorganic lubricant used in a seal layer; i.e., the inner surface layer. Examples include talc, diatomaceous earth, silica, zeolite, calcium carbonate, and aluminosilicate. The fillers are preferably spherical particles. In addition, the difference in refractive index between a filler and a resin contained in the seal layer is preferably controlled with care. When the difference in refractive index between the filler and the resin is excessively large, the transparency of the seal layer becomes poor. Thus, fillers such as silica, aluminosilicate, and zeolite are preferably used, from viewpoints of refractive index and dispersibility. The inorganic lubricant preferably has an average particle size as measured through a Coulter counter method of 0.5-10 µm, more preferably 1-7 µm. In the best mode, the inorganic lubricant has the above average particle size, with particles of a size greater than 10 µm being removed. When the average particle size is large, the transparency of the seal layer becomes poor, and the film strength may decrease, whereas when the average size is too small, the effect in enhancement of lubricity is small, and dispersibility becomes problematically poor.

In the present invention, "organic lubricant" refers to lubricants such as hydrocarbon lubricants, fatty acid lubricants, fatty acid amide lubricants, ester lubricants, and metallic soap. Specifically, examples of the hydrocarbon lubricants include liquid paraffin, natural paraffin, polyethylene wax, and microwax. Examples of the fatty acid lubricants include stearic acid and lauric acid. Examples of the fatty acid amide lubricants include stearic acid amide, palmitic acid amide, N-oleylpalmitic acid amide, behenic acid amide, erucic acid amide, arachic acid amide, oleic acid amide, esylic acid amide, methylenebis (stearoamide), and ethylenebis (stearoamide). Examples of the ester lubricants include butyl stearate, hydrogenated castor oil, ethylene glycol monostearate, and stearic acid monoglyceride. Examples of the metallic soap include those derived from a C12-C30 fatty acid; e.g., stearates such as lead stearate.

Of these organic lubricants, fatty acid amide lubricants and metallic soap are preferably used, in view of high compatibility to polyolefin resin. In the present invention, the lubricant includes no plasticizer, particularly no plasticizer which is liquid at ambient temperature.

Examples of the resin to be used in the packaging laminate of the present invention include linear low-density polyethylene produced through polymerization in the presence of a single-site catalyst (hereinafter abbreviated as "SSC") (hereinafter the polymer is abbreviated as "SSC-LLDPE"), linear very-low-density polyethylene produced through polymerization in the presence of SSC (hereinafter abbreviated as "SSC-VLDPE"), conventional ethylene-α-olefin copolymers (LLDPE, VLDPE, ULDPE), ethylene-vinyl acetate copolymer (EVA), ethylene-methacrylic acid copolymer (EMAA), ethylene-methacrylic acid-unsaturated aliphatic carboxylic acid copolymers, high-density polyethylene, LDPE, ionomer resin, ethylene-acrylic acid copolymer, ethylene-methyl acrylate copolymer, ethylene-methyl methacrylate copolymer, modified polyolefin (e.g., reaction products of an olefin homopolymer or copolymer with an unsaturated carboxylic acid such as maleic acid or fumaric acid; an anhydride, an ester, or a metal salt thereof), polypropylene (PP) resin, copolyester (Co-PET), aliphatic nylon, aromatic nylons, and the mixture thereof. These resins can be used so long as the transparency is not deteriorated. Of these, the resius specified in claim 1 are used for the inner surface layer and polyethylenes such as SSC-LLDPE and SSC-VLDPE produced in the presence of a single site catalyst are preferably used in the inner surface layer and the outer surface layer. In a surface layer including a seal layer, polymers such as LLDPE, VLDPE, EVA, EMAA, ethylene-methacrylic acid-unsaturated aliphatic carboxylic acid copolymer, ethylene-acrylic acid copolymer, and ionomer resin are often used.

The gas barrier resin which is to be used in the packaging laminate of the present invention is used to form an oxygen-gas-barrier layer. Examples include known EVOH (saponified ethylene-vinyl acetate copolymer); aromatic polyamides such as poly (m-xylyleneadipamide) (hereinafter abbreviated as "nylon MXD6") produced from an aromatic diamine component, aromatic polyamides such as poly (hexamethyleneisophthalamide-terphthalamide), which is an isophthalic acid-terephthalic acid-hexamethylenediamine copolymer, (hereinafter abbreviated as "nylon 6I/6T") produced from an aromatic carboxylic acid component, PVDC (vinylidene chloride copolymer), and acrylonitrile copolymers. Among these gas-barrier resins, PVDC is preferred in view of low moisture-dependence of oxygen-gas-barrier property, and EVOH and nylon MXD6 are preferred in view of co-extrusion processability .

In the case in which a certain level of mechanical strength at low temperature and heat resistance are required, a material having excellent mechanical strength at low temperature or heat resistance may further be provided appropriately to form another layer included in the outer surface layer or an intermediate layer, in accordance with needs. Regarding polyamide (PA), examples include aliphatic polyamides such as nylon-6 (polycapramide), nylon-66 (poly (hexamethyleneadipamide)), nylon-610 (poly (hexamethylenesebacamide)), nylon-12 (ring-opened lauryllactam polymer), nylon-6/66 (ε-caprolactam-hexamethyleneadipamide copolymer), nylon-6/610 (ε-caprolactam-hexamethylenesebacamide copolymer), nylon-6/12 (ε-caprolactam-lauryllactam copolymer), nylon-6/66/610 (ε-caprolactam-hexamethyleneadipamide-hexamethylenesebacamide copolymer), and nylon-6/66/12 (ε-caprolactam-hexamethyleneadipamide-lauryllactam copolymer). Of these, nylon-6/66 and nylon-6/12 are preferred in view of processability. The above PAs may be used singly or in combination of two or more species. In addition, blends of such an aliphatic polyamide in a predominant amount with an aromatic polyamide may also be employed. Examples of the polyester (hereinafter abbreviated as "PET") include poly (ethylene terephthalate), poly (butylene terephthalate), and poly (ethylene terephthalate)-poly (ethylene isophthalate) copolymers.

An adhesive layer may be provided between component layers of the packaging laminate of the present invention, in accordance with needs. Examples of the resin which can be used in the adhesive layer include ethylene-vinyl acetate copolymer (EVA), ethylene-ethyl acrylate copolymer (EEA), acid-modified ethylene-acrylic acid polymer (EAA),acid-modified VLDPE, acid-modified LLDPE (the species of VLDPE and LLDPE include those produced in the presence of a single-site catalyst), and known acid-modified polyolefins. Modification by acid is carried out by graft-polymerizing an unsaturated acid such as maleic acid, itaconic acid, an anhydride thereof, acrylic acid, or methacrylic acid. The thickness of the adhesive layer comprising these resins may be increased, to thereby serve as an intermediate layer. Typical layer configurations of the packaging laminate of the present invention will be shown below.

The adhesive layer is provided, in accordance with needs, between the outer surface layer and an intermediate layer, between two intermediate layers, and/or between an intermediate layer and the inner surface layer. When an adhesive layer is employed, description of the layer is omitted.
(1) Outer surface layer/Intermediate layer/Inner surface layer → LLDPE/PA/LLDPE, and PA/acid-modified LLDPE/LLDPE;
(2) Outer surface layer/Intermediate layer/Intermediate layer/Inner surface layer → EVA/EVOH/EVA/EMAA, EVA/PVDC/EVA/LLDPE, PET/PA/EVOH/VLDPE, and PET/PA/EVOH/LLDPE; and
(3) Outer surface layer/Intermediate layer/Intermediate layer/Intermediate layer/Inner surface layer → SSC-VLDPE/EVA/PVDC/EVA/IO, and PA/EVA/PVDC/EVA/IO.

In the layer structure, the aforementioned inorganic lubricant or the aforementioned inorganic and organic lubricants may be added to the inner surface layer. Instead of being added to the inner surface layer, the organic lubricant may be added to an intermediate layer adjacent to the inner surface layer, after which the added lubricant is caused to migrate to the inner surface layer (bleed-out), to thereby impart openability to a bag or a pouch. To the outer surface layer, an inorganic lubricant and an organic lubricant may be added in such an amount that does not greatly affect gloss thereof. Alternatively, an organic lubricant is added not to the outer surface layer (bleed-out) but to an intermediate layer adjacent to the outer layer, and the added lubricant is caused to migrate to the outer surface layer, to thereby provide lubricity. The amount of the inorganic lubricant added to the outer layer is preferably adjusted to 0.5 wt.% or less, in view of minimizing decrease in transparency and gloss. Film of the laminate preferably has a gloss represented by gloss value of at least 90% before shrinkage and has a transparency represented by haze of 20% or less. In the present invention, when the outer surface layer is caused to shrink through, for example, immersing in hot water, the powder applied onto the surface is removed from the surface, to thereby have no effect on the appearance of a packaging material after shrinkage. Thus, a powder may be applied in accordance with needs.

The film or sheet formed of the packaging laminate of the present invention has a thickness falling within the range of 5-300 µm, preferably 10-150 µm, more preferably 20-120 µm. When the thickness is less than 5 µm, sufficient mechanical properties cannot be obtained, whereas when the thickness is in excess of 300 µm, transparency and stretchability deteriorate.

Film and sheets formed of the packaging laminate of the present invention are produced by a plurality of extruders equipped with dies such as customary circular dies or T-dies. Additional resin layers may be laminated onto the outer surface layers of the thus-produced films and sheets through a known lamination method. The heat-shrinkable laminate is produced at first by forming coextruded unstretched film by a plurality of extruders and then biaxially stretching the unstretched film through a known method such as a tenter method or an inflation method. Specifically, in order to produce an unstretched, resins; i.e., a resin for forming the inner surface layer to which an inorganic lubricant and an organic lubricant have been added or a resin for forming the inner surface layer to which an inorganic lubricant has been added; a resin for forming an intermediate layer (adjacent to the inner surface layer) to which an organic lubricant has been added; and a resin for forming the outer surface layer are extruded by separate extruders and introduced into a circular die, to form a coextruded tubular laminate; the resultant coextruded tubular laminate is cooled; and around the air captured by the tubular laminate, the tubular laminate is stretched in a radial direction and a perpendicular direction, to thereby produce a tubular laminate film comprising at least three layers. In this case, no treatment for applying free starch micropowder onto the inner surface of the tubular laminate film is performed. Alternatively, in order to produce a stretched, resins to which the aforementioned lubricants have been added are extruded by respective extruders and introduced into a circular die, to form a coextruded tubular laminate; the outer surface of the resultant coextruded tubular laminate is cooled by water to a temperature not higher than the melting points of the resins forming each layers; the thus-cooled tubular laminate is transferred to an orientation zone, and heated again to a temperature not higher than the melting points of the resins forming each layers; air is blown to the interior of the tubular laminate for cooling, when the tubular laminate travels a zone between first and second means for blocking air flow therein; and, around the air captured by the tubular laminate, the tubular product is stretched in a radial direction and a perpendicular direction, to thereby form a biaxially-stretched tubular laminate. In this case, no treatment for applying free starch micropowder onto the inner surface layer of the tubular laminate film is performed.

The laminate may be irradiated with a radiation beam, before or after stretching, through a known irradiation method. By treatment of a radiation beam, properties such as stretchability, heat resistance, and mechanical strength can be further enhanced as compared a non-irradiated laminate.

Irradiation with a radiation beam provides an appropriate cross-linking effect, to thereby improve heat resistance and film-formability due to stretching. In the present invention, known radiation beams such as α-ray, β-ray, electron beam, γ-ray, and X-ray can be used. Of these, electron beam and γ-ray are preferred, from a point of view of cross-linking effect before and after irradiation. Furthermore, electron beam is advantageously employed from the viewpoints of ease of operation during molding process and provision of high productivity.

The conditions for irradiation with the aforementioned radiation beams may be appropriately determined in accordance with purposes. For example, when an electron beam is employed, the acceleration voltage preferably falls within the range of 150-500 kV and the dose preferably falls within the range of 10-200 kGy. When γ-ray is employed, the dose rate is preferably 0.05-3 kGy/hour.

The amount of the organic lubricant which is to be added to the intermediate layer adjacent to the inner surface layer or to the intermediate layer adjacent to the outer surface layer varies in accordance with the type of the resin employed in the intermediate layer and the ratio of the thickness the intermediate layer to that of the surface layer, and preferably falls within the range of 0.05-5 wt.%, more preferably 0.1-2 wt.%. The amount is automatically determined on the basis of the performance of an apparatus such as a bag-forming machine or an automated packaging machine, transparency, or gloss. The organic lubricant is preferably included at least in the inner surface layer.

The inner surface of the film/sheet formed of the packaging laminate of the present invention preferably has a dynamic friction coefficient (between the portions of the same film/sheet) falling within the range of 0.1-0.5, more preferably 0.1-0.4, most preferably 0.13-0.3. When the dynamic friction coefficient is below the lower limit, excessive sliding occurs, to thereby cause poor adaptability to machines and poor handling performance during actual operation for packaging by use of the film, whereas when the dynamic friction coefficient is in excess of the upper limit, openability may become poor. The amount of the inorganic lubricant or a mixture of the inorganic and organic lubricants which is to be added to the inner surface layer can be determined in accordance with the target dynamic friction coefficient of the aforementioned inner surface layer.

The inorganic lubricant is added to the inner surface layer preferably in an amount of approximately 0.3-2 wt.%. The amount of organic lubricant, which is to be added to the inner surface layer, is preferably 0.1-1 wt.%. Although transparency and gloss of the film itself decrease with increase in amount of the inorganic lubricant or the organic lubricant, the film is thermally self-welded, to thereby recover transparency and gloss. Thus, a packaging laminate of high commercial value can be obtained.

Bags and pouches formed of the packaging laminate of the present invention can serve as a material for packaging meat or fish meat, particularly, are most suitable for vacuum packaging of foods such as raw meat, ham, sausage, and fish meat.

### Examples

The present invention will next be described in detail by way of examples, which should not be construed as limiting the invention thereto. The resin materials and methods of measuring physical properties employed in the present invention will be described hereunder.

### (Resin materials)

### (1) SSC-VLDPE

SSC-VLDPE (density = 0.902 g/cm³, MFR = 3.0 g/10 min, melting point = 100°C) (hereinafter abbreviated as "SSC-VLDPE") was used.

### (2) Resins for producing an adhesive layer

EEA resin DPDJ-6182K (product of Nippon Unicar Co., Ltd.) (hereinafter abbreviated as "EEA") and Admer SF-730 (product of Mitsui Chemicals, Inc.) (hereinafter abbreviated as "Mod-VL") were used.

### (3) PVDC

### PVDC resin (Krehalon^{™} FB-7, product of Kureha Chemical Industry Co., Ltd.) was used.

### (4) EVA

EVA (density = 0.94 g/cm³, MFR = 2.0 g/10 min, vinyl acetate content = 19 wt.%, erucic acid amide; 2000 ppm, antistatic agent; stearic acid mono- and di-glyceride boric acid ester, 2000 ppm) (hereinafter abbreviated as "EVA-1") and EVA (density = 0.94 g/cm³, MFR = 2.5 g/10 min, vinyl acetate content = 15 wt.%) (hereinafter abbreviated as "EVA-2") were used.

### (5) Ionomer

Ionomer (density = 0.94 g/cm³, MFR = 3.1 g/10 min, melting point = 90°C, ionization degree = 8%) (hereinafter abbreviated as "IO") was used. The ratio of enthalpy of crystal fusion (at a specific temperature of 80°C or lower) to enthalpy of crystal fusion (within the entire fusion temperature range) was approximately 39%.

### (6) Polyester

Poly (ethylene terephthalate)-poly (ethylene isophthalate) copolymer (Bellpet^{™} IFG8L, product of Kanebo, Ltd.) (hereinafter abbreviated as "CO-PET") was used.

### (7) Nylon 6/66 copolymer

NOVAMID^{™} 2430A1 (product of Mitsui Engineering-Plastics Corporation) (hereinafter abbreviated as "Ny 6/66") was used.

### (8) Saponified ethylene-vinyl acetate copolymer

Eval^{™} EPG-156B (product of Kuraray Co., Ltd.) (hereinafter abbreviated as "EVOH") was used.

### (9) Linear very-low-density polyethylene

Linear very-low-density polyethylene (density = 0.908 g/cm³, MFR = 3.0 g/10 min) (hereinafter abbreviated as "VLDPE") was used. The ratio of enthalpy of crystal fusion (at a specific temperature of 95°C or lower) to enthalpy of crystal fusion (within the entire fusion temperature range) was approximately 41%.

### (Measurement of physical properties and evaluation methods)

### 1. Friction coefficient

The dynamic friction coefficient of test pieces in the machine direction was measured in accordance with JIS K 7125 by use of a friction testing machine (model TR, product of Toyo Seiki Seisakusho). Measurement was performed for the friction between the inner surface of a test piece and the same inner surface of the same test piece. The higher the friction coefficient, the poorer the lubricity.

### 2. Gloss

The gloss (%) of test pieces was measured in accordance with JIS Z 8741 by use of a haze meter (NDH-Σ₈₀, product of Nihon Denshoku Kogyosha). The higher the gloss value, the more excellent the gloss.

### 3. Transparency (haze)

The haze (%) of test pieces was measured in accordance with JIS K 7105 by use of a haze meter (NDH-Σ₈₀, product of Nihon Denshoku Kogyosha). The light-receiving and light-reflection angles were set to 60°. The lower the haze value, the more excellent the transparency. In other words, the higher the haze value, the worse the transparency. The transparency of the film was measured by use of a sheet of produced multi-layer film. The transparency of the edge was evaluated in the following manner. An object was filled into a bag made of biaxially stretched film, followed by vacuum packaging. The transparency (haze) of the portion other than the portion of packed matter (edge, i.e., where two sheets of film were in contact with each other at their inner surfaces) was measured.

### 4. Measurement of enthalpy of-crystal fusion

The enthalpy was measured by use of a differential scanning calorimeter (DBSC-7, product of Perkin-Elmer) under the following conditions.

### (Preparation of samples to be measured)

A film sample of 5 - 10 mg was weighed and placed within an aluminum pan, to thereby prepare a sample to be measured.

### (Temperature profile in measurement)

The sample was heated from 20°C to 200°C at 20°C/minute, and maintained for one minute. Subsequently, the sample was cooled to 20°C at 100°C/minute, and maintained for three minutes. The sample was heated again from 20°C to 200°C at 20°C/minute. The enthalpy of crystal fusion of the sample was obtained from the endo-thermal curve corresponding to the second heating. The enthalpy over the entire fusion temperature range -- from the temperature at which fusion began to the temperature at which fusing was terminated was obtained through peak calculation. The enthalpy in a temperature range not higher than a specific temperature was obtained by calculating the corresponding partial area contained in the area corresponding to the enthalpy over the entire fusion temperature range.

### 5. Openability of bag

The produced multi-layer film was formed into a bag by use of a bag-producing machine (model BM 37, product of Kureha Chemical Industry Co., Ltd.). The thus-obtained bag has one end opened and another end closed. The ease of opening the open portion was evaluated on the basis of the following ratings:
O: when the bag is placed on a horizontal plane and the upper side of the open portion is picked up, the inner surface of the bag forms a complete opening;
Δ: when the bag is placed on a horizontal plane and the upper side of the open portion is picked up, part of the inner surface of the bag remains adhered; and
X: when the bag is placed on a horizontal plane and the upper side of the open portion is picked up, the inner surface of the bag remains almost completely adhered.

### 6. Self-weldability

### (Preparation of test pieces)

An object to be packed was filled into a bag which had been produced from the multi-layer film. Upon packaging, the length of the edge (i.e., distance between a seal line and the end of the content after vacuum packaging) was controlled to be a sufficient length (e.g., at least 200 mm) such that the following measurement can be performed. In addition, care was taken for preventing wrinkles in the edge. The package containing the content was immersed for 10 seconds in hot water at a predetermined temperature (80°C for Examples 1 to 3 and Comparative Examples 1 to 3; 95°C for Example 4 and Comparative Example 4). Subsequently, the package was removed, and immediately cooled in water at ambient temperature.

### (Measurement)

The packed content was removed from the thus-shrunk package, and the packaging film was allowed to stand in a thermostat chamber at 23°C and a relative humidity of 50% for at least 24 hours. The peel strength of a melt-adhered portion of the edge was measured by means of a tensile tester (Tensilon RTM-100, product of Orientec) under the following conditions:
width of the specimen: 15 mm;
Length of the adhered portion: 30 mm;
Distance between clamps: 20 mm;
Speed of clamp movement: 200 mm/min;
Temperature of measurement atmosphere: 23°C; and
Humidity of measurement atmosphere: 50% RH.
The obtained values represent average strength (g/15 mm).

### 7. Percent shrinkage induced by hot water

On a multi-layer film specimen, two marks having an interval of 10 cm were provided in the machine direction and the transverse direction, respectively. The specimen was immersed for 10 seconds in hot water at a predetermined temperature (80°C for Examples 1 to 3 and Comparative Examples 1 to 3; 90°C for Example 4 and Comparative Example 4). Subsequently, the specimen was removed, and immediately cooled in water at ambient temperature. The distance between each set of two marks was measured, and the obtained distance was subtracted from 10 cm. The percent shrinkage was represented by the ratio of the thus-obtained value to 10 cm. The procedure was carried out five times, and the percent shrinkage was calculated as the average value.

### 8. Visual evaluation of edge of the package

The transparency of the edge of a package which had been subjected to vacuum packaging of a content and caused to shrink by immersing in hot water at a predetermined temperature (80°C for Examples 1 to 3 and Comparative Examples 1 to 3; 95°C for Example 4 and Comparative Example 4) for 10 seconds was visually evaluated on the basis of the following ratings:
O: excellent transparency of the edge, uniform transparency, and good appearance of the package; and
X: failure to attain uniform transparency of the edge caused by powder, and poor appearance of the package.

### 9. Visual evaluation of gloss of the film after completion of packaging

The gloss of a portion which was in contact with the content of a package which had been subjected to vacuum packaging and caused to shrink by immersion for 10 seconds in hot water at a predetermined temperature (80°C for Examples 1 to 3 and Comparative Examples 1 to 3; 95°C for Example 4 and Comparative Example 4) was visually evaluated on the basis of the following ratings:
O: excellent gloss of the surface of the package, and good appearance of the package; and
X: poor gloss of the surface of the package, and problematic appearance of the package.

### (Lubricant master batch)

Table 1 shows lubricant-containing master batches that were employed in the present invention.

**Table 1**

| | Producers | Products | Content | Base resin |
|---|---|---|---|---|
| MB-1 | M.D.P^{*1} | TF7018 | Silica 20 wt% | EMAA^{*4} |
| MB-2 | M.D.P^{*1} | TF6004 | Erucic acid amide 15 wt% | EMAA^{*4} |
| mB-3 | S.C^{*2} | A-11 | Erucic acid amide 2 wt% | ^{*5} |
| MB-4 | M.B^{*3} | LDZ-50-20 | Zeolite 20 wt% | LDPE^{*5} |

| | | | | |
|---|---|---|---|---|
| M.D.P^{*1}: Du Pont-Mitsui Polychemicals Co., Ltd.; S.C^{*2}: Sumitomo Chemical Co., Ltd.; M.B^{*3}: Mitsui Bussan Sampuku Kogyo; EMAA^{*4}: Ethylene-methacrylic acid copolymer; and LDPE^{*5}: Low-density polyethylene. | | | | |

### (Example 1)

Six kinds of resins; i.e., PVDC; SSC-VLDPE; EVA-1 to which an organic lubricant had been added in advance; EVA-2 to which no lubricant had been added; EEA; and ionomer (IO) to which lubricant master batches MB-1 and MB-2 had been added such that erucic acid amide content and silica content were controlled to 0.38 wt.% and 2 wt.%, respectively, were extruded by means of six respective extruders. Each molten polymer was introduced into a coextrusion circular die so as to form seven layers; i.e., (SSC-VLDPE-1)/(EVA-1)/(EEA)/(PVDC)/(EEA)/(EVA-2)/(IO) (in order from the outer surface layer to the inner surface layer), which were melt-bonded together in the die and were coextruded. To the inside of the as-extruded tubular product, soybean oil to serve as an opening agent during a subsequent stretching step was introduced, and the tubular product was cooled by cold water (10-20°C), to thereby form a flat tubular product. The flat tubular product was irradiated, in an electron-beam-radiation apparatus providing an acceleration voltage of 300 keV, with electron beam from the outside of the product at a total dose of 80 kGy., followed by passage in a hot water bath at 82°C. The thus-treated tubular product was biaxially stretched simultaneously (3.1 times in the machine direction and 3.0 times in the transverse direction) through an inflation method under cooling by means of an air ring. No starch powder (particle-size controlled) was applied onto the inner surface of the thus-obtained biaxially stretched film.

### (Example 2)

The procedure of Example 1 was repeated, except that the lubricant master batches were added such that erucic acid amide content in the ionomer of Example 1 was adjusted to 0.75 wt.%, to thereby produce biaxially stretched film.

### (Example 3)

The procedure of Example 1 was repeated, except that the lubricant master batches were added such that silica content in the ionomer of Example 1 was adjusted to 1 wt.%, to thereby produce biaxially stretched film.

### (Example 4)

Five kinds of resins; i.e., CO-PET to which silica (0.1 wt.%) had been added; Ny 6/66 to which no lubricant had been added; EVOH; Mod-VL; and VLDPE to which lubricant master batches MB-3 and MB-4 had been added such that erucic acid amide content and zeolite content were controlled to 0.4 wt.% and 1 wt.%, respectively, were extruded by means of five respective extruders. Each molten polymer was introduced into a co-extrusion circular die so as to form six layers; i.e., (CO-PET)/(Mod-VL)/(Ny 6/66)/(EVOH)/(Mod-VL)/(VLDPE) (in order from the outer surface layer to the inner surface layer), which were melt-bonded together in the die and coextruded. To the inside of the as-extruded tubular product, soybean oil to serve as an opening agent during a subsequent stretching step was introduced. The tubular product was cooled by cold water (10-20°C), to thereby form a flat tubular product. The flat tubular product was passed in a hot water bath at 90°C. The thus-treated tubular product was biaxially stretched simultaneously (3.0 times in the machine direction and 3.1 times in the transverse direction) through an inflation method under cooling by means of an air ring. Subsequently, the biaxially stretched film was introduced into a heat treatment column having a column length of 2 m so as to form a bubble-shape tubular film, followed by heating at 70°C with steam for two seconds while the film was relaxed at 10% in the machine and transverse directions. No starch powder (particle-size controlled) was applied onto the inner surface of the thus-obtained biaxially stretched film.

### (Comparative Example 1)

The procedure of Example 1 was repeated, except that the erucic acid amide content and the silica content in the ionomer of Example 1 were adjusted to 0 wt.%, and starch powder (particle-size controlled) was added in an amount of 90 mg/m² to the inner surface, to thereby produce biaxially stretched film.

### (Comparative Example 2)

The procedure of Example 3 was repeated, except that the erucic acid a mide content in the ionomer of Example 3 was adjusted to 0 wt.%, to thereby produce biaxially stretched film.

### (Comparative Example 3)

The procedure of Example 1 was repeated, except that the erucic acid amide content in the ionomer of Example 1 was adjusted to 0 wt.%, to thereby produce biaxially stretched film.

### (Comparative Example 4)

The procedure of Example 4 was repeated, except that the erucic acid amide content and the zeolite content in VLDPE of Example 4 were adjusted to 0 wt.%, and starch powder (particle-size controlled) was added in an amount of 90 mg/m² to the inner surface, to thereby produce biaxially stretched film.

Tables 2 and 3 show, regarding the films produced in the Examples and the Comparative Examples, conditions of addition of lubricants, physical properties of the produced film, and evaluation results of transparency of the edge, openability of the produced bags, and self-weldability of the inner surface.

**Table 2-1**

| | | | | | Ex. 1 | Ex. 2 | Ex. 3 | Ex. 4 |
|---|---|---|---|---|---|---|---|---|
| Film layer | 1st layer | | | (3 µm) | SSC-VLDPE | → | → | CO-PET (2 µm) |
| structure | 2nd layer | | | (22) | EVA-1 | → | → | Mod VL (1 5) |
| | 3rd layer | | | (1 5) | EEA | → | → | Ny 6-66 (7) |
| | 4th layer | | | (7) | PVDC | → | → | EVOH (5) |
| | 5th layer | | | (1 5) | EEA | → | → | Mod-VL (1 5) |
| | 6th layer | | | (15) | EVA-2 | → | → | VLDPE (21) |
| | 7th layer | | | (10) | IO | → | → | None |
| Amount of powder applied onto | | | | | 0 | 0 | 0 | 0 |
| inner surface | | (mg/m²) | | | | | | |
| Amount of organic lubricant | | | | | 0.38 | 0.75 | 0.38 | 0.4 |
| in inner surface | | (wt%) | | | | | | |
| Amount of inorganic lubricant | | | | | 2 | 2 | 1 | 1 |
| in inner surface | | (wt%) | | | | | | |
| Friction coefficients static | | | | | 0.23 | 0 21 | 0.26 | 0.27 |
| (inner surface) | | | dynamic | | 0.19 | 0.15 | 0.21 | 0.20 |
| Film transparency | | | | | 8 | 10 | 6 | 19 |
| | | | | (haze) % | | | | |
| Transparency of edge, after | | | | | | | | |
| shrinkage at 80°C | | | (haze) % | | 20 | 20 | 18 | 9(90°C) |
| visual evaluation | | | | | ○ | ○ | ○ | ○ |

**Table 2-2**

| | | | Ex. 1 | Ex. 2 | Ex. 3 | Ex. 4 |
|---|---|---|---|---|---|---|
| Film layer | 1st layer | (3 µm) | SSC-VLDPE | → | → | CO-PET (2 µm) |
| structure | 2nd layer | (22) | EVA-1 | → | → | Mod VL (1 5) |
| | 3rd layer | (1 5) | EEA | → | → | Ny 6-66 (7) |
| | 4th layer | (7) | PVDC | → | → | EVOH (5) |
| | 5th layer | (1 5) | EEA | → | → | Mod-VL (1 5) |
| | 6th layer | (15) | EVA-2 | → | → | VLDPE (21) |
| | 7th layer | (10) | IO | → | → | None |
| Film gloss (gloss) % MD/TD | | | 106/104 | 104/102 | 110/109 | 108/107 |
| Gloss of package surface after shrinkage (visual evaluation) | | | ○ | ○ | ○ | ○ |
| Openability of bag | | | ○ | ○ | ○ | ○ |
| Self-weldability of inner | | | | | | |
| surface | | 80°C | 1180 | 1200 | 1200 | |
| | | 95°C | | | | 40 |
| Shrinkage by hot water, | | 80°C | 49/51 | 49/49 | 49/50 | 24/32(90°C) |
| | | MD/TD | | | | |

**Table 3-1**

| | | | Comp. Ex. 1 | Comp. Ex. 2 | Comp. Ex. 3 | Comp. Ex. 4 |
|---|---|---|---|---|---|---|
| Film layer | 1st layer | (3 µm) | SSC-VLDPE | → | → | CO-PET (2 µm) |
| structure | 2nd layer | (22) | EVA-1 | → | → | Mod VL (1 5) |
| | 3rd layer | (1 5) | EEA | → | → | Ny 6-66 (7) |
| | 4th layer | (7) | PVDC | → | → | EVOH (5) |
| | 5th layer | (1.5) | EEA | → | → | Mod-VL (1.5) |
| | 6th layer | (15) | EVA-2 | → | → | VLDPE (21) |
| | 7th layer | (10) | IO | → | → | None |
| Amount of powder applied onto | | | 90 | 0 | 0 | 90 |
| inner surface (mg/m²) | | | | | | |
| Amount of organic lubricant | | | 0 | 0 | 0 | 0 |
| in inner surface (wt%) | | | | | | |
| Amount of inorganic lubricant | | | 0 | 1 | 2 | 0 |
| in inner surface (wt%) | | | | | | |
| Friction coefficients static | | | 0 21 | 0 77 | 0.51 | 0 32 |
| (inner surface) | | dynamic | 0.18 | 0.76 | 0 34 | 0 21 |
| Film transparency | | | 2 | 5 | 10 | 10 |
| | | (haze) % | | | | |
| Transparency of edge, after | | | | | | |
| shrinkage at 80°C | | (haze) % | 38 | 17 | 18 | 15(90°C) |
| visual evaluation | | | X | ○ | ○ | X |

**Table 3-2**

| | | | Comp. Ex. 1 | Comp. Ex. 2 | Comp. Ex. 3 | Comp. Ex. 4 |
|---|---|---|---|---|---|---|
| Film layer | 1st layer | (3 µm) | SSC-VLDPE | → | → | CO-PET (2 µm) |
| structure | 2nd layer | (22) | EVA-1 | → | → | Mod-VL (1 5) |
| | 3rd layer | (1 5) | EEA | → | → | Ny 6-66 (7) |
| | 4th layer | (7) | PVDC | → | → | EVOH (5) |
| | 5th layer | (1.5) | EEA | → | → | Mod VL (1.5) |
| | 6th layer | (15) | EVA-2 | → | → | VLDPE (21) |
| | 7th layer | (10) | IO | → | → | None |
| Film gloss (gloss) % MD/TD | | | 121/115 | 110/108 | 104/101 | 109/108 |
| Gloss of package surface | | | ○ | ○ | ○ | ○ |
| after shrinkage | | | | | | |
| Openability of bag | | | ○ | X | △ | 0 |
| Self-weldability of inner | | | | | | |
| surface | | 80°C | 560 | 1200 | 1100 | |
| | | 95°C | | | | 40 |
| Shrinkage by hot water, 80°C | | | 50/50 | 49/50 | 49/49 | 24/31 (90°C) |
| | | MD/TD | | | | |

### Industrial Applicability

The multi-layer film according to the present invention is endowed with excellent openability and exhibits excellent transparency after packaging of a content and self-weldability. Particularly, when the film is formed into a bag and is subjected to vacuum packaging, the edge exhibits excellent transparency. Thus, a package of attractive appearance can be obtained.

## Claims

1. A packaging laminate being heat-shrinkable and comprising at least three layers including an inner surface layer coming into contact with an object to be packed, an intermediate layer adjacent thereto and containing an organic lubricant, and an outer surface layer, wherein the inner surface layer contains an inorganic lubricant and an organic lubricant and consists essentially of at least one kind of resin selected from the group consisting of polyethylene produced through polymerization in the presence of a single-site catalyst, LLDPE, VLDPE, EVA, EMAA, ethylene-methacrylic acid-unsaturated aliphatic carboxylic acid copolymer, ethylene-acrylic acid copolymer, and ionomer resin, said inner surface layer having self-weldability obtainable by heat-treating said at least one kind of resin at a specific temperature which gives a ratio of enthalpy of crystal fusion within the specific temperature or lower to enthalpy of crystal fusion within the entire fusion temperature range of at least 15 % (measured by means of differential Scanning calorimetry as described in the description under point "4 Measurement of enthalpy of crystal fusion").

2. A packaging laminate as described in claim 1, for packaging meat or fish meat.

3. A packaging laminate as described in claim 1 or 2, wherein the inner surface layer has a dynamic friction coefficient of 0.1-0.5.

4. A packaging laminate as described in any one of claims 1 to 3, wherein the inner surface layer serves as a seal layer.

5. A packaging laminate as described in any one of claims 1 to 4, wherein the inner surface layer contains an added inorganic lubricant, and the inner surface layer or the intermediate layer adjacent to the inner surface layer contains an added organic lubricant.

6. A packaging laminate as described in claim 5, wherein the intermediate layer adjacent to the outer surface layer contains an added organic lubricant.

7. A packaging laminate as described in any one of claims 1 to 6, wherein the outer surface layer contains no added inorganic lubricant.

8. A packaging laminate as described in any one of claims 1 to 7, wherein at least one of the inner surface layer and the outer surface layer is formed of the polyethylene produced in the presence of a single-site catalyst.

9. A packaging laminate as described in any one of claims 1 to 8, wherein the intermediate layer includes at least one gas-barrier layer.

10. A packaging laminate as described in any one Of claims 1 to 9, wherein the inner surface layer is not subjected to treatment by use of free starch microparticles.

11. A packaging laminate as described in any one of claims 1 to 10, wherein the outer surface is formed of a polyester resin or a nylon resin, and contains an inorganic lubricant.

## Patentansprüche

1. Mehrschichtiges Verpackungsmaterial, das wärmeschrumpfbar ist und mindestens 3 Schichten, einschließlich einer inneren, mit einem zu verpackenden Gegenstand in Kontakt kommenden Oberflächenschicht, einer dieser benachbarten, ein organisches Gleitmittel enthaltenden Zwischenschicht und einer äußeren Oberflächenschicht umfasst, worin die innere Oberflächenschicht ein anorganisches und ein organisches Gleitmittel enthält und im Wesentlichen aus mindestens einer Art von Harz besteht, das aus der Gruppe bestehend aus einem durch Polymerisation in Gegenwart eines Single-Site-Katalysators hergestellten Polyethylens, LLDPE, VLDPE, EVA, EMAA, einem Copolymer aus Ethylenmethacrylsäure und ungesättigter aliphatischer Carbonsäure, einem Ethylenacrylsäure-Copolymer und einem ionomeren Harz ausgewählt ist, wobei die innere Oberflächenschicht eine durch Wärmebehandlung mindestens einer Art von Harz bei einer bestimmten Temperatur, die ein Verhältnis der Schmelzenthalpie von Kristallen innerhalb der bestimmten Temperatur oder darunter zu der Enthalpie der Kristallschmelze innerhalb des gesamten Schmelztemperaturbereichs von mindestens 15% ergibt (gemessen mit Hilfe von dynamischer Differenzkalorimetrie wie in der Beschreibung unter Punkt "4. Messung der Enthalpie von Kristallschmelze" beschrieben), erhältliche eigene Schweißfähigkeit hat.

2. Mehrschichtiges Verpackungsmaterial nach Anspruch 1 zum Verpacken von Fleisch oder Fischfleisch.

3. Mehrschichtiges Verpackungsmaterial nach Anspruch 1 oder 2, worin die innere Oberflächenschicht einen dynamischen Reibungskoeffizienten von 0,1 bis 0,5 hat.

4. Mehrschichtiges Verpackungsmaterial nach einem der Ansprüche 1 bis 3, worin die innere Oberflächenschicht als eine Siegelschicht dient.

5. Mehrschichtiges Verpackungsmaterial nach einem der Ansprüche 1 bis 4, worin die innere Oberflächenschicht ein zugesetztes anorganisches Gleitmittel und die innere Oberflächenschicht oder die der inneren Oberflächenschicht benachbarte Zwischenschicht ein zugesetztes organisches Gleitmittel enthalten.

6. Mehrschichtiges Verpackungsmaterial nach Anspruch 5, worin die der äußeren Oberflächenschicht benachbarte Zwischenschicht ein zugesetztes organisches Gleitmittel enthält.

7. Mehrschichtiges Verpackungsmaterial nach einem der Ansprüche 1 bis 6, worin die äußere Oberflächenschicht kein zugesetztes anorganisches Gleitmittel enthält.

8. Mehrschichtiges Verpackungsmaterial nach einem der Ansprüche 1 bis 7, worin mindestens eine der inneren und äußeren Oberflächenschichten durch das in Gegenwart des Single-Site-Katalysators hergestellte Polyethylen gebildet wird.

9. Mehrschichtiges Verpackungsmaterial nach einem der Ansprüche 1 bis 8, worin die Zwischenschicht mindestens eine Gasbarrierenschicht beinhaltet.

10. Mehrschichtiges Verpackungsmaterial nach einem der Ansprüche 1 bis 9, worin die innere Oberflächenschicht nicht der Behandlung durch Einsatz freier Stärkemikropartikel unterworfen wird.

11. Mehrschichtiges Verpackungsmaterial nach einem der Ansprüche 1 bis 10, worin die Außenoberfläche durch ein Polyester-Harz oder ein Nylon-Harz gebildet wird und ein anorganisches Gleitmittel enthält.

## Revendications

1. Laminé de conditionnement thermo-rétractable et comprenant au moins trois couches comportant une couche de surface interne venant en contact avec un objet à conditionner, une couche intermédiaire adjacente à cette dernière et contenant un lubrifiant organique, et une couche de surface externe, dans lequel la couche de surface interne contient un lubrifiant inorganique et un lubrifiant organique et consiste principalement en au moins un type de résine sélectionné à partir du groupe constitué par du polyéthylène produit par polymérisation en la présence d'un catalyseur à site unique, du LLDPE, du VLDPE, de l'EVA, de l'EMAA, un copolymère éthylène-acide méthacrylique-acide carboxylique aliphatique insaturé, un copolymère éthylène-acide acrylique, et une résine ionomère, ladite couche de surface interne présentant une mouillabilité propre pouvant être obtenue par un traitement thermique dudit au moins un type de résine à une température spécifique qui donne un rapport de l'enthalpie de fusion de cristal à la température spécifique ou inférieure sur l'enthalpie de fusion de cristal à l'intérieur de la plage de température de fusion totale d'au moins de 15 %, (mesuré au moyen de la calorimétrie à balayage différentiel telle que décrite dans la description sous le chapitre "4. Mesure de l'enthalpie de fusion de cristal").

2. Laminé de conditionnement selon la revendication 1, destiné à conditionner de la viande ou de la chair de poisson.

3. Laminé de conditionnement selon la revendication 1 ou 2, dans lequel la couche de surface interne présente un coefficient de frottement dynamique de 0,1 à 0,5.

4. Laminé de conditionnement selon l'une quelconque des revendications 1 à 3, dans lequel la couche de surface interne sert de couche de scellement.

5. Laminé de conditionnement selon l'une quelconque des revendications 1 à 4, dans lequel la couche de surface interne contient un lubrifiant inorganique ajouté, et la couche de surface interne ou la couche intermédiaire adjacente à la couche de surface interne contient un lubrifiant organique ajouté.

6. Laminé de conditionnement selon la revendication 5, dans lequel la couche intermédiaire adjacente à la couche de surface externe contient un lubrifiant organique ajouté.

7. Laminé de conditionnement selon l'une quelconque des revendications 1 à 6, dans lequel la couche de surface externe ne contient pas de lubrifiant inorganique ajouté.

8. Laminé de conditionnement selon l'une quelconque des revendications 1 à 7, dans lequel au moins l'une de la couche de surface interne et de la couche de surface externe est formée à partir du polyéthylène produit en la présence d'un catalyseur à site unique.

9. Laminé de conditionnement selon l'une quelconque des revendications 1 à 8, dans lequel la couche intermédiaire comporte au moins une couche formant barrière au gaz.

10. Laminé de conditionnement selon l'une quelconque des revendications 1 à 9, dans lequel la couche de surface interne n'est pas soumise à un traitement par utilisation de microparticules d'amidon libres.

11. Laminé de conditionnement selon l'une quelconque des revendications 1 à 10, dans lequel la surface externe est formée de résine polyester ou de résine de nylon , et contient un lubrifiant inorganique .
